# EUROPÄISCHE PATENTANMELDUNG

(11) **EP 3 591 362 A1**
(43) Veröffentlichungstag der Anmeldung: **08.01.2020**
(21) Anmeldenummer: 19181626.3
(22) Anmeldetag: 21.06.2019
(51) Int. Cl.: G01L 3/10, B62M 6/50

(54) **VERFAHREN ZUR MESSUNG EINES DREHMOMENTS EINER ANTRIEBSEINHEIT**

(30) Priorität: 05.07.2018 DE 102018211082
(71) Anmelder: Robert Bosch GmbH, 70442 Stuttgart (DE)
(72) Erfinder: Stegmaier, Juergen, 72827 Wannweil (DE); Greiner, Rinaldo, 72768 Reutlingen (DE)

(57) **Zusammenfassung**

Die Erfindung betrifft ein Verfahren zur Messung eines Drehmoments einer Antriebseinheit, insbesondere eines Zweiradfahrzeugs, umfassend die Schritte
- Messen von Werten eines Magnetfelds in zumindest einer Richtung im Bereich der Antriebseinheit mittels eines Magnetfeldsensors,
- Auswerten der gemessenen Werte des Magnetfelds mittels einer Auswerteeinheit und Bereitstellen eines Ergebnisses,
- Messen von Werten eines Drehmoments an der Antriebseinheit mittels eines Drehmomentsensors,
- Bereitstellen der gemessenen Werte des Drehmoments,
- Auslösen zumindest einer Aktion in Bezug auf die bereitgestellten Werte des Drehmoments anhand des bereitgestellten Ergebnisses durch die Auswerteeinheit.

## Beschreibung

### Technisches Gebiet

Die Erfindung betrifft ein Verfahren zur Messung eines Drehmoments einer Antriebseinheit, insbesondere eines Zweiradfahrzeugs.

Die Erfindung betrifft weiter eine Vorrichtung zum Messen eines Drehmoments einer Antriebseinheit, insbesondere eines Zweiradfahrzeugs.

Obwohl die vorliegende Erfindung allgemein auf beliebige Antriebseinheiten anwendbar ist, wird die vorliegende Erfindung in Bezug auf Antriebseinheiten für Elektrofahrräder erläutert.

### Stand der Technik

In Elektrofahrrädern werden in bekannter Weise Drehmomentmessungen durchgeführt, um bestimmte Fahrfunktionen von Elektrofahrrädern bereitzustellen, indem beispielsweise anhand des gemessenen Drehmoments der Elektroantrieb entsprechend geregelt wird. Zur Messung von Drehmomenten ist es hierzu bekannt geworden, Sensoren auf Basis von magnetischen Messprinzipien, beispielsweise basierend auf den GMR-Effekt, einzusetzen.

Im Betrieb eines Elektrofahrrads lässt es sich nicht vermeiden, dass die Antriebseinheit magnetischen Umwelteinflüssen ausgesetzt ist. Dazu zählen unter anderem:
- Das Erdmagnetfeld, dessen Magnetfeldstärke bis zu 60 Mikrotesla beträgt. Durch Kurvenfahrt und Wechsel der Himmelsrichtung, in die sich das Elektrofahrrad bewegt, verändert sich die in den Messachsen des Sensors gemessene Magnetfeldstärke kontinuierlich.
- Magnetfelder durch starke elektrische Antriebsmotoren, wie sie beispielsweise in Straßenbahnen anzutreffen sind.
- Magnetfelder durch Induktionsschleifen im Straßenverkehr etc.

Neben diesen Umwelteinflüssen besteht die Möglichkeit, dass starke Permanentmagnete, wie beispielsweise Magnete von Fahrradtachometern zur Messung von Fahrgeschwindigkeit oder Trittfrequenz, in unmittelbare Nähe an der Antriebseinheit angeordnet sind. Dies kann sogar zu einem metallischen Kontakt zwischen Antriebseinheit (Tretwelle) und Permanentmagnet führen. In diesem Fall kann es dazu kommen, dass sich Stahlteile innerhalb der Antriebseinheit aufgrund ihrer ferromagnetischen Eigenschaften magnetisieren.

### Offenbarung der Erfindung

In einer Ausführungsform stellt die Erfindung ein Verfahren zur Messung eines Drehmoments an einer Antriebseinheit, insbesondere eines Zweiradfahrzeugs, bereit, umfassend die Schritte
- Messen von Werten eines Magnetfelds in zumindest einer Richtung im Bereich der Antriebseinheit mittels eines Magnetfeldsensors,
- Auswerten der gemessenen Werte des Magnetfelds mittels einer Auswerteeinheit und Bereitstellen eines Ergebnisses,
- Messen von Werten eines Drehmoments an der Antriebseinheit mittels eines Drehmomentsensors,
- Bereitstellen der gemessenen Werte des Drehmoments,
- Auslösen zumindest einer Aktion in Bezug auf die bereitgestellten Werte des Drehmoments anhand des bereitgestellten Ergebnisses durch die Auswerteeinheit.

In einer weiteren Ausführungsform stellt die Erfindung eine Vorrichtung zum Messen eines Drehmoments einer Antriebseinheit, insbesondere eines Zweiradfahrzeugs bereit, umfassend einen Drehmomentsensor zur Messung des Drehmoments der Antriebseinheit eines Fahrzeugs, insbesondere einer Pedaleinheit, einen Magnetfeldsensor zur Messung eines Magnetfelds im Bereich der Antriebseinheit und eine Auswerteeinheit, wobei die Auswerteinheit ausgebildet ist, die gemessenen Werte des Magnetfelds auszuwerten, ein Ergebnis bereitzustellen und anhand des Ergebnisses zumindest eine Aktion auszulösen.

Einer der damit erzielten Vorteile ist, dass magnetische Störeinflüsse, beispielsweise externe und/oder interne magnetische Störungen zuverlässig und in kürzester Zeit erkannt werden. Ein weiterer Vorteil ist, dass damit das Betreiben insbesondere eines Elektrofahrrades besonders zuverlässig erfolgen kann. Darüber hinaus wird die Wartung vereinfacht, da entsprechende Aktionen, beispielsweise das Ausgeben einer Fehlermeldung oder dergleichen ermöglicht werden. Schließlich können gegebenenfalls Störeinflüsse ganz oder teilweise durch das Auslösen einer entsprechenden Aktion kompensiert werden.

Mit anderen Worten werden Fehlfunktionen durch magnetische Störeinflüsse durch Messung von deren Magnetfeldern zuverlässig erkannt und die Funktion des Drehmomentsensors durch Auslösen einer Aktion abgesichert.

Weitere Merkmale, Vorteile und weitere Ausführungsformen der Erfindung sind im Folgenden beschrieben oder werden dadurch offenbar.

Gemäß einer vorteilhaften Weiterbildung erfolgt das Auswerten anhand eines Vergleichs mit einem Schwellwert, und bei einer Schwellwertüberschreitung wird die zumindest eine Aktion ausgelöst. Damit können auf einfache und zuverlässige Weise unerwünschte Magnetfelder oberhalb einer gewissen Schwelle detektiert werden und eine oder mehrere Aktionen daraufhin ausgelöst werden.

Gemäß einer weiteren vorteilhaften Weiterbildung werden Werte einer Beschleunigung mittels eines Beschleunigungssensors gemessen und mittels der Auswerteeinheit ausgewertet, wobei beim Auswerten eine Korrelation zwischen den gemessenen Werten des Magnetfeldes und der Beschleunigung ermittelt wird. Auf diese Weise kann beispielsweise die Funktionsfähigkeit des Magnetfeldsensors während der Fahrt überprüft werden: Mittels des Beschleunigungssensors kann beispielsweise eine Pendelbewegung erfasst werden und mit den Werten des Magnetfeldsensors verglichen werden, sodass bei einer vorhandenen oder nichtvorhandenen Korrelation eine oder mehrere Aktionen ausgelöst werden können.

Gemäß einer weiteren vorteilhaften Weiterbildung wird der zeitliche Verlauf der gemessenen Werte des Magnetfeldes mittels der Auswerteeinheit ausgewertet. Anhand des zeitlichen Verlaufs des Magnetfeldes lässt sich auf genauere Weise die Störung durch Magnetfelder und gegebenenfalls deren Quelle ermitteln, was die Genauigkeit bei der Messung des Drehmoments und bei dem Auslösen zumindest einer Aktion erhöht.

Gemäß einer weiteren vorteilhaften Weiterbildung wird bei periodischem zeitlichen Variieren der gemessenen Werte des Magnetfeldes und bei einem Vorliegen eines charakteristischen zeitlichen Verlaufs von Werten des Drehmoments und/oder der Beschleunigung, die zumindest eine Aktion ausgelöst. Ist beispielsweise ein unerwünschtes Magnetfeld über einen längeren Zeitraum vorhanden und bewegt sich das Fahrrad, führt also eine charakteristische Bewegung aus, kann daraus dann geschlossen werden, dass das unerwünschte Magnetfeld von einem mitgeführten Bauteil des Fahrrades ausgeht. Es kann dann anhand dieser Information beispielsweise eine entsprechende Fehlermeldung als Aktion ausgegeben werden.

Gemäß einer weiteren vorteilhaften Weiterbildung wird mittels der Auswerteeinheit überprüft, ob gemessenen Werte des Magnetfeldes zu einer Änderung von gemessenen Werten des Drehmoments führen und wenn nicht, wird die zumindest eine Aktion ausgelöst. So kann beispielsweise ermittelt werden, ob der Drehmomentsensor defekt ist: wird ein entsprechendes Magnetfeld festgestellt, welches jedoch nicht zu Änderungen der Werte des Drehmoments führt, kann daraus geschlossen werden, dass der Drehmomentsensor defekt ist, und es kann als Aktion beispielsweise eine entsprechende Fehlermeldung ausgegeben werden.

Gemäß einer weiteren vorteilhaften Weiterbildung umfasst die zumindest eine Aktion eine Korrektur der gemessenen Werte des Drehmoments anhand ausgewerteter Werte des Magnetfeldes. Damit wird die Zuverlässigkeit der Messung des Drehmoments und damit beispielsweise der Fahrfunktionen eines Elektrofahrrads verbessert.

Gemäß einer weiteren vorteilhaften Weiterbildung erfolgt die Korrektur anhand einer vorab ermittelten Korrekturlinie und/oder dynamisch. Mittels einer vorab ermittelten Korrekturlinie, welche insbesondere den Zusammenhang zwischen gemessenen Werten des Magnetfeldes und die Auswirkung auf die gemessenen Werte des Drehmoments wiedergibt, kann auf einfache Weise die Genauigkeit des Drehmomentsensors verbessert werden. Eine Korrektur kann alternativ oder zusätzlich dynamisch, insbesondere im laufenden Betrieb des Elektrofahrrads, ermittelt werden. So kann beispielsweise eine Fahrsituation genutzt werden, in der kein Drehmoment auf Pedale einer Pedaleinheit eines Elektrofahrrads wirken. Dies ist beispielsweise dann gegeben, wenn das Fahrrad in Bewegung ist und keine Trittfrequenz registriert wird. In diesem Zustand wird das vom Magnetfeldsensor gemessene Magnetfeld mit dem gemessenen Drehmoment des Drehmomentsensors verglichen und in der Korrekturtabelle abgespeichert. Auf diese Weise kann im Laufe der Zeit die Korrekturtabelle befüllt oder korrigiert werden und entsprechend dann Drehmomentwerte des Drehmomentsensors kompensiert werden.

Gemäß einer weiteren vorteilhaften Weiterbildung wird als Aktion das Ausgeben einer Fehlermeldung, die mit dem ermittelten Ergebnis korrespondiert und/oder ein Korrigieren von gemessenen Werten des Drehmomentsensors, des Magnetfeldsensors und/oder des Beschleunigungssensors ausgelöst. Damit kann sowohl die Wartung im Falle einer Fehlermeldung vereinfacht werden als auch das Drehmoment zuverlässig ermittelt werden.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

Dabei zeigt in schematischer Form
- Figur 1: eine Antriebseinheit gemäß einer Ausführungsform der vorliegenden Erfindung;
- Figur 2: gemessene Drehmoment- und Magnetfeldwerte über die Zeit gemäß einer Ausführungsform der vorliegenden Erfindung; und
- Figur 3: Schritte eines Verfahrens gemäß einer Ausführungsform der vorliegenden Erfindung.

### Ausführungsformen der Erfindung

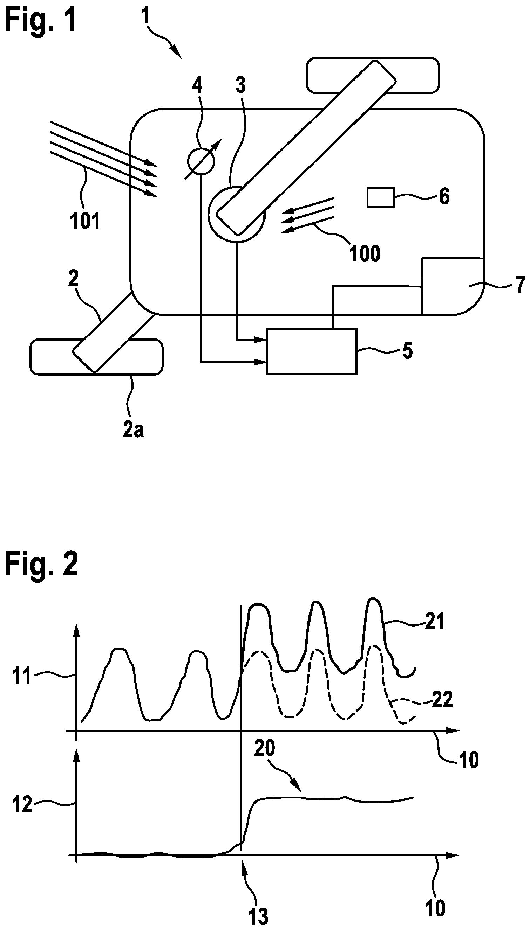

Figur 1 zeigt in schematischer Form eine Antriebseinheit gemäß einer Ausführungsform der vorliegenden Erfindung und Fig. 2 zeigt gemessene Drehmoment- und Magnetfeldwerte über die Zeit gemäß einer Ausführungsform der vorliegenden Erfindung.

In Figur 1 ist im Detail eine Antriebseinheit 1 in Form einer Pedaleinheit gezeigt. Die Pedaleinheit 1 umfasst dabei eine Kurbel 2 mit Pedalen 2a, wobei an der Achse der Kurbel 2 ein Drehmomentsensor 3 angeordnet ist. Weiterhin ist in oder an der Antriebseinheit 1 ein Magnetfeldsensor 4 angeordnet, der allgemein im Bereich der Antriebselement 1 ein vorhandenes Magnetfeld 100, 101 misst, also einerseits ein Magnetfeld 100 durch magnetische Teile 6 der Antriebseinheit 1, andererseits externe Magnetfelder 101, wie beispielsweise das Erdmagnetfeld oder dergleichen. Darüber hinaus weist die Antriebseinheit 1 einen Beschleunigungssensor 7 auf, der eine Beschleunigung der Antriebseinheit 1 in zumindest eine Richtung misst. Drehmomentsensor 3, Magnetfeldsensor 4 als auch Beschleunigungssensor 7 sind mit einer Auswerte-/Steuereinheit 5 verbunden.

In Figur 2 ist im unteren Bereich der Verlauf der magnetischen Flussdichte (B-Feld) 12 aufgetragen über der Zeit 10 gezeigt. Bei einem Zeitpunkt 13 wird ein erhöhtes B-Feld 12 aufgrund einer externen Störung 20, also beispielsweise ein unerwünschtes Magnetfeld, gemessen. In Figur 2 im oberen Bereich ist in Abhängigkeit der Zeit 10 ein gemessenes Fahrerdrehmoment 11 gezeigt. Zum Zeitpunkt 13, bei dem die externe Störung 20 erfolgt, wird dadurch ein gestörtes, hier ein erhöhtes Signal 21 des Fahrerdrehmoments gemessen. Dieses wird dann anhand der gemessenen Werte des B-Feldes 12 kompensiert, sodass ein kompensiertes Fahrerdrehmoment 22 ausgegeben wird.

Mittels der Auswerte-/Steuereinheit 5 werden somit Störungen von Messungen durch den Drehmomentsensor 3 durch einwirkende Magnetfelder 100, 101 sicher erkannt. Der Magnetfeldsensor 4 ist hierzu insbesondere innerhalb eines Gehäuses der Antriebseinheit 1 angeordnet, insbesondere in räumlicher Nähe zum Drehmomentsensor 3. Der Magnetfeldsensor 4 weist dabei eine ausreichende Genauigkeit beziehungsweise Messauflösung auf, um Magnetfeldstärken im Mikrotesla-Bereich aufzulösen.

Mittels der Auswerte-/Steuereinheit 5 kann das Messsignal des Magnetfeldsensors 4 mit einem Schwellwert verglichen werden. Der Schwellwert kann beispielsweise größer als das Erdmagnetfeld gewählt werden. Übersteigt das gemessene beziehungsweise einstreuende Magnetfeld 100, 101 diesen Schwellwert, kann eine Fehlermeldung angezeigt werden und/oder der Betrieb der Antriebseinheit 1 eingestellt werden. Der Betrieb kann wieder freigegeben werden, sobald die Störung nicht mehr vorhanden ist. Die Funktionsfähigkeit des Magnetfeldsensors 4 kann während der Fahrt des Elektrofahrrads, bei der auch immer eine Pendelbewegung stattfindet, korreliert werden. Hierbei wird die Pendelbewegung durch den Beschleunigungssensor 7 erfasst und die Messwerte mit den Werten des Magnetfeldsensors 4 mittels der Auswerte-/Steuereinheit 5 verglichen. Ist die Pendelbewegung durch Messwerte des Magnetfeldsensors 4 nicht sichtbar, jedoch durch Messwerte des Beschleunigungssensors 7, so kann auf eine Fehlfunktion des Magnetfeldsensors 4 geschlossen werden.

Liegt das Störfeld, also das externe Magnetfeld 101 oder ein internes Magnetfeld 100 durch magnetische Teile 6, über einen längeren Zeitraum an, in dem sich das Elektrofahrrad in Bewegung befindet, deutet dies darauf hin, dass die Störung von einem mitgeführten Bauteil des Elektrofahrrads ausgeht. Anhand dieser Information kann eine zweite entsprechende Fehlermeldung ausgegeben werden. Verändern sich Werte des gemessenen Magnetfelds 100, 101 periodisch und liegt gleichzeitig eine Tretbewegung der Kurbel 2 vor, kann dann daraus geschlossen werden, dass Bauteile der Antriebseinheit 1, beispielsweise die Tretachse oder Metallzahnräder oder dergleichen, dauerhaft magnetisiert sind. In diesem Fall kann eine Fehlermeldung mit entsprechendem Hinweis angezeigt werden.

Werden Werte für das gemessene Magnetfeld 100, 101 oberhalb eines gemessenen Schwellwerts ermittelt und führen diese jedoch nicht zu einer Änderung der gemessenen Werte des Drehmomentsensors 3, kann daraus geschlossen werden, dass der Drehmomentsensor 3 defekt ist und es kann eine weitere Fehlermeldung ausgegeben werden.

In einer weiteren Ausführungsform kann der Magnetfeldsensor 4 nicht nur dazu genutzt werden, um den Drehmomentsensor 3 zu überwachen, sondern auch, um dessen Funktion, genauer seine Messgenauigkeit zu verbessern. Ist beispielsweise die Stärke des externen Magnetfelds 101 bekannt, kann dieses kompensiert werden. Dazu wird anhand der vom Magnetfeldsensor 4 gemessenen Werte das Drehmomentsignal dynamisch korrigiert, wie dies in Figur 2 dargestellt ist. Die Korrektur kann beispielsweise anhand einer zuvor ermittelten Korrekturkennlinie erfolgen, die den Zusammenhang zwischen externem Magnetfeld 101 und Auswirkung auf die Drehmomentmessung beschreibt. Die Korrekturkennlinie kann auch dynamisch im Betrieb ermittelt werden. Dazu wird insbesondere eine Fahrsituation genutzt, in der kein Drehmoment an der Kurbel 2 der Antriebseinheit 1 anliegt. Diese Situation ist beispielsweise gegeben, wenn das Elektrofahrrad in Bewegung ist und keine Trittfrequenz registriert werden. In diesem Zustand wird das vom Magnetfeldsensor 4 gemessene Magnetfeld 101 mit dem zeitgleich gemessenen Drehmoment des Drehmomentsensors 3 verglichen und in der Korrekturtabelle abgespeichert. Auf diese Weise kann im Laufe der Zeit die Korrekturtabelle befüllt und/oder korrigiert werden. Um die Richtungsabhängigkeit des Magnetfelds 100, 101 als zusätzliche Information nutzen zu können, können bei allen genannten Ausführungsformen statt des Betrags des Magnetfelds 100, 101 auch die richtungsabhängigen Anteile in den Koordinatenachsen des Magnetfeldsensors 4 genutzt werden.

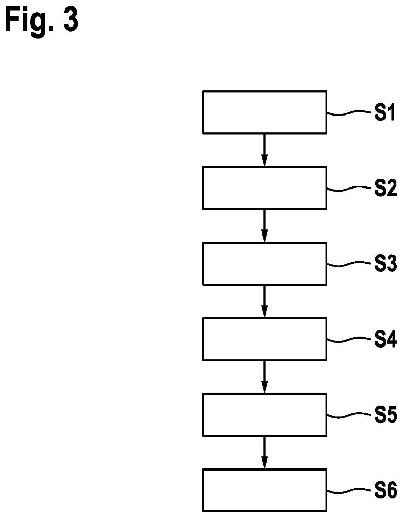

Figur 3 zeigt Schritte eines Verfahrens gemäß einer Ausführungsform der vorliegenden Erfindung.

In Figur 3 ist ein Verfahren zur Messung eines Drehmoments einer Antriebseinheit eines Fahrzeugs gezeigt.

In einem ersten Schritt S1 erfolgt ein Messen von Werten eines Magnetfelds 100, 101 in zumindest einer Richtung im Bereich der Antriebseinheit 1 mittels eines Magnetfeldsensors 4.

In einem zweiten Schritt S2 erfolgt ein Auswerten der gemessenen Werte des Magnetfelds mittels einer Auswerteeinheit 5.

In einem dritten Schritt S3 erfolgt ein Bereitstellen eines Ergebnisses.

In einem vierten Schritt S4 erfolgt ein Messen von Werten eines Drehmoments an der Antriebseinheit 1 mittels eines Drehmomentsensors 3.

In einem fünften Schritt S5 erfolgt ein Bereitstellen der gemessenen Werte des Drehmoments.

In einem sechsten Schritt S6 erfolgt ein Auslösen zumindest einer Aktion in Bezug auf die bereitgestellten Werte des Drehmoments anhand des bereitgestellten Ergebnisses durch die Auswerteeinheit 5.

Zusammenfassend weist zumindest eine der Ausführungsformen der Erfindung zumindest einen der folgenden Vorteile auf:
- Zuverlässigere Funktion des Drehmomentsensors.
- Kompensation von Störeinflüssen auf den Drehmomentsensor möglich.
- Fahrfunktionen werden abgesichert.
- Vereinfachte Wartung.
- Einfache Diagnose.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Verfahren zur Messung eines Drehmoments einer Antriebseinheit (1), insbesondere eines Zweiradfahrzeugs, umfassend die Schritte
- Messen (S1) von Werten eines Magnetfelds (100, 101) in zumindest einer Richtung im Bereich der Antriebseinheit (1) mittels eines Magnetfeldsensors (4),
- Auswerten (S2) der gemessenen Werte des Magnetfelds mittels einer Auswerteeinheit (5) und Bereitstellen (S3) eines Ergebnisses,
- Messen (S4) von Werten eines Drehmoments an der Antriebseinheit (1) mittels eines Drehmomentsensors (3),
- Bereitstellen (S5) der gemessenen Werte des Drehmoments,
- Auslösen (S6) zumindest einer Aktion in Bezug auf die bereitgestellten Werte des Drehmoments anhand des bereitgestellten Ergebnisses durch die Auswerteeinheit (5).

2. Verfahren gemäß Anspruch 1, wobei das Auswerten (S2) anhand eines Vergleichs mit einem Schwellwert erfolgt, und bei einer Schwellwertüberschreitung die zumindest eine Aktion ausgelöst wird.

3. Verfahren gemäß einem der Ansprüche 1-2, wobei Werte einer Beschleunigung mittels eines Beschleunigungssensors (7) mittels der Auswerteeinheit (5) gemessen und ausgewertet werden, wobei beim Auswerten (S2) eine Korrelation zwischen den gemessenen Werten des Magnetfeldes (100, 101) und der Beschleunigung ermittelt wird.

4. Verfahren gemäß einem Ansprüche 1-3, wobei der zeitliche Verlauf (12) der gemessenen Werte des Magnetfelds (100, 101) mittels der Auswerteeinheit (5) ausgewertet wird.

5. Verfahren gemäß Anspruch 4, wobei bei periodischem zeitlichen Variieren (12) der gemessenen Werte des Magnetfelds (100, 101) und bei einem Vorliegen eines charakteristischen zeitlichen Verlaufs von Werten (11) des Drehmoments und/oder der Beschleunigung die zumindest eine Aktion ausgelöst wird.

6. Verfahren gemäß einem der Ansprüche 1-5, wobei mittels der Auswerteinheit (5) überprüft wird, ob gemessene Werte des Magnetfelds (100, 101) zu einer Änderung von gemessenen Werten des Drehmoments (11) führen und wenn nicht, wird die zumindest eine Aktion ausgelöst.

7. Verfahren gemäß einem der Ansprüche 1-6, wobei die zumindest eine Aktion eine Korrektur (22) der gemessenen Werte (11) des Drehmoments anhand ausgewerteter Werte des Magnetfelds (100, 101) umfasst.

8. Verfahren gemäß Anspruch 7, wobei die Korrektur (22) anhand einer vorab ermittelten Korrekturlinie oder dynamisch erfolgt.

9. Verfahren gemäß einem der Ansprüche 1-8, wobei als Aktion das Ausgeben einer Fehlermeldung, die mit dem ermittelten Ergebnis korrespondiert, und/oder ein Korrigieren von gemessenen Werten des Drehmomentsensors (3), des Magnetfeldsensors (4) und/oder des Beschleunigungssensors (7) ausgelöst wird.

10. Vorrichtung zum Messen eines Drehmoments einer Antriebseinheit, insbesondere eines Zweiradfahrzeugs, umfassend
einen Drehmomentsensor (3) zur Messung des Drehmoments der Antriebseinheit (1) eines Fahrzeugs, insbesondere einer Pedaleinheit,
einen Magnetfeldsensor (4) zur Messung eines Magnetfelds (100, 101) im Bereich der Antriebseinheit (1) und
eine Auswerteeinheit (5), wobei die Auswerteinheit (5) ausgebildet ist, die gemessenen Werte des Magnetfelds (100, 101) auszuwerten, ein Ergebnis bereitzustellen und anhand des Ergebnisses zumindest eine Aktion auszulösen.
